(19) Europäisches Patentamt

European Patent Office

Office européen des brevets

(11) EP 1 685 936 A1

(12) EUROPEAN PATENT APPLICATION

(43) Date of publication:
02.08.2006 Bulletin 2006/31

(51) Int Cl.:
B29C 44/12 (2006.01)          B29C 70/66 (2006.01)
B29C 70/08 (2006.01)          B32B 5/18 (2006.01)

(21) Application number: 05075221.1

(22) Date of filing: 28.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: Lantor B.V.
3901 RG  Veenendaal (NL)

(72) Inventors:
• Anjema, Pieter
3904 HL Veenendaal (NL)

• Lamers, Peter Hubertus
3904 PW Veenendaal (NL)

(74) Representative: Winckels, Johannes Hubertus F.
et al
Vereenigde,
Johan de Wittlaan 7
2517 JR Den Haag (NL)

(54)     **Core material**

(57)     The invention is directed to a core material that can be easily welded so that a welded core material is obtained, which can be used to produce large sized laminated structures, while the surface finish of said large sized laminated structures is acceptable in that the presence of the welds in said core material does not give rise to unacceptable surface defects in said laminated structure. According to the present invention there is provided a gradient in the micro-spheres on the edge of the core material in the direction of the side of the core material.

Fig. 1

EP 1 685 936 A1

**Description**

The invention is directed to core material, in particular core material that is based on micro-spheres, which core material finds use in the production of fibre reinforced plastics materials, more in particular suitable for application in continuous lamination, closed mould systems, spray up applications and/or hand-lay up applications.

Core materials are described *inter alia* in WO-A-2004/028776, EP-A-1 010 793, EP-A-0 895 843 and EP-A-0 190 788, the contents of which documents are incorporated herein by reference. The present invention is in particular directed to core materials comprising a web, of a woven or non-woven material, in and/or on which web foam members, in particular expanded micro-spheres are present. The foam members may have a regular or a random distribution.

Plastics reinforced with fibrous webs, are often used for manufacturing shaped articles, such as automotive or industrial parts, e.g. tanks, bath tubs, road signs, panels, boats, caravans, *etc.*

Fibrous webs are suitable as a reinforcement for all kinds of cured synthetic plastics materials, such as polyester resin or epoxy resin. Generally, the incorporation of a fibrous web in a resin material results in increased strength, stiffness, fatigue life, fracture toughness, environmental resistance, increased temperature stability, reduced weight and reduced manufacturing cost of said resin material.

Use of core materials in fibre reinforced plastics has already been known for decades. The aim thereof is on the one hand to decrease the amount of resin required, resulting in cost and weight savings, and on the other hand to improve some mechanical properties of the material, more in particular the bending stiffness.

EP-A- 0 190 788 is directed to the use of a fibrous web, incorporating micro-spheres, for the manufacture of objects reinforced with such a fibrous web. The micro-spheres are mainly contained within the web and arranged in a pattern in which areas of the web, which contain micro-spheres, are separated from each other by areas which contain virtually no micro-spheres.

EP-A-0 895 843 discloses a fibrous web which may comprise micro-spheres, which web further comprises indicating means, by which the impregnation of the web with liquid resin and hardener can be monitored.

EP-A-1 010 793 is also directed to fibrous webs, which may be based on expanded micro-spheres, wherein the properties of the various components, fibres, binder, foam structure and the like are carefully balanced, so that an optimal balance between conflicting properties, in particular good compression resistance on the one hand and good flow of resin through the core material in all directions on the other, may be obtained.

WO-A-2004/028776 also discloses fibrous webs, which may be based on expanded thermoplastic micro-spheres. By distributing the micro-spheres in a particular fashion, excellent surface finish of the laminated product is obtained, as expressed quantitatively by the so-called orange peel value.

Although it is possible to obtain laminated structures of excellent quality by using the core materials described in the above-mentioned documents, in particular laminates having an excellent surface finish, the present inventors found that it is difficult to produce laminated structures of a large dimension, while maintaining an acceptable surface appearance. The reason for this is that the core material is generally produced by the rotating screen printing methods discussed in the above-mentioned documents, which implies that the width of the core material is confined to the width of the printing screen rolls used. In order to produce laminated structures that are larger, two sheets of core material must be welded together.

One way of connecting two pieces of core material is by laying the two ends to be joined against one other without overlapping and fastening them e.g. by gluing a fine gauze or the like that overlaps both pieces, so that the two pieces of core material form a butt joint (also referred to as flush joint).

It was found, however, that this leads to unacceptable results with respect to surface finish, since in practice a perfect butt joint can not be realized easily, in particular not when the products are large (e.g. several meters) and consequently the joint must be tight over a long distance. Even when the joining is carried out manually it was found to be very difficult to obtain joined pieces of core material, that could serve as a single core material for producing a laminated structure wherein no signs of the weld (sometimes also referred to as seam, clearance, joint or splice) printed through on the surface of the finished product. It will be even more difficult to produce such composite core materials in an automated production facility.

Joining the two pieces of conventional core material by allowing both edges to overlap did not produce a final laminated structure with acceptable surface finish either, since this resulted in a structure where the weld was clearly visible on the surface. Also the structure is clearly thicker at the place of the weld.

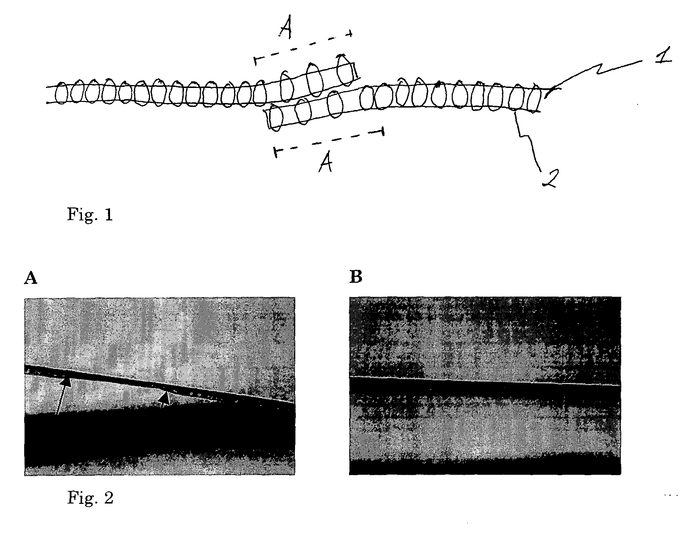

The present inventors also investigated the possibility of producing the core material provided with a strip of typically several centimeters wide at one side of the core material, on which strip the amount of micro-spheres was reduced. This is schematically represented in Fig. 1, showing a side view of a mat of core material, comprising micro-spheres 1, present in web 2. The density of micro-spheres 1 in the strip that is formed by the section indicated by A is more or less half the density of micro-spheres in the bulk of the core material. A piece of core material provided with such a strip was then combined with a similar piece also provided with such a strip, so that the micro-spheres present on the strip of the first piece of core material would be more or less complementary to those of the opposite strip and thus provide a composite core material wherein the density of the combined micro-spheres on both strips would be comparable to that of the bulk of the core material (more or less analogously to a zipper). However, this did not produce the desired result with respect to surface finish of the final laminated product either, and. in fact gave rise to occurrence of two visible lines on the surface of the laminated final structure. Moreover, this joint gave rise to a strip in the overlapping region of the laminate, where the thickness of the laminate was decreased. This is illustrated in Fig. 2A. The decreased thickness may result in an unacceptable decrease of mechanical properties. In practice it turns out to be very difficult, if not impossible, to obtain a good match of the complementing micro-spheres.

The present invention seeks to overcome the above-mentioned problems.

Surprisingly it was found that good results can be obtained by providing a core material, comprising a strip at one or more of its edges, in which strip the density of micro-spheres changes in the direction of the edge of the core material. Thus, in a first aspect, the present invention is directed to a core material based on at least one fibrous web containing a foam-structure within the web, said foam-structure being formed of a plurality of members, which members are separated from each other by channels that are permeable to resin, which material comprises a zone at one or more of its edges, in which zone the density of said foam-structure members changes in the direction of the edge of said core material nearest to said zone.

The density of the foam-structure members may be expressed as the number of members per unit area of the core material.

The surface finish of the final laminate product of the present invention is excellent and does not show any signs of the joint. Additionally, the final laminate product has a more or less homogeneous thickness, i.e. no thinner portion in the overlapping region, which portion might give rise to a weak spot of the final laminate product. An example of a laminated structure obtainable by the present invention is given in Fig. 2B. The mechanical characteristics of the material according to the present invention are therefore good.

In a preferred embodiment, the gradient of the density of members that are present in a part of the core material is negative in the direction of the edge of the core material sheet, in other words, the density of the foam-structure members decreases in the direction of the edge of said core material nearest to said zone. It was found that in this way particularly good surface finish is obtained, because when two sheets of core material are placed so that their edges overlap at least partly, the higher density of the first sheet is adjacent to the lower density of the second sheet, which results in a uniform weld. Also the thickness of the laminated structure is more or less homogeneous.

The zone wherein the density of the foam structure members shows a gradient may be varied. It is generally not necessary to make this zone much wider than about 6 cm. On the other hand it is preferably larger than about 1 cm, because this enables an easy matching, by hand or by machine, of the two respective zones before attaching the two sheets together. Preferably the zone has a width of from about 2 to about 5 cm, more preferably of about 3 cm. This width provides for a robust welding.

The way in which the density changes may be varied. Good results are obtained when the density of the foam-structure members changes essentially linearly in the direction of the edge of said core material nearest to said zone. The combination of two zones wherein the density of each changes linearly results in a stack of the two zones, which functions as the normal core material and wherein the density of the foam-structure members is more or less constant.

In a preferred embodiment, the foam structure members that are present in the zone are of the same size (or essentially the same size) as the foam structure members in the remainder of the core material. A uniform size of the foam structure members ensures that the two zones are combined easily and may yield a homogeneous structure when combined.

Preferred foam structure members comprise micro-spheres. Suitable diameters for these members are less than 3 mm, preferably 0.5 - 2 mm. Preferably the channels between the members have a an average diameter of less than 1 mm, preferably 0.2 - 0.8 mm.

After combining the two (or more) sheets of core material having the specific strip in accordance with the present invention, the sheets can be attached by using means known *per se.* Examples of means to attach the two sheets are strips of material in the form of gauzes, such as plastic; fleeces; spunbonds; spunlays and the like. The attaching strips can be placed over the junction on the top side and/or over the junction on the bottom side, but may also be placed in the junction between the two sheets. These strips can be made from for instance polyamide, polyester, polyolefin, polyvinylchloride, etc. The sheets may be welded together e.g. by gluing (self-adhesive or hot melt, the latter requiring additional heating). It is important that the permeability of the resulting combination for the resin that is to be applied later is maintained. For this reason, open structures such as gauzes are preferred. It is also possible to attach the sheets by (long-stitch) sewing or the like.

The sheets of core material according the present invention may also be provided with two or more of the zones with a gradient in density of foam-structure members. This can be used to produce combinations of more than two sheets so that correspondingly large laminated structures can be produced and possibly also pipes, which are formed from one sheet.

The attachment of the respective sheets is preferably carried out by placing the zones of the first sheet on top of the zone of the other, so that these zones overlap at least in part. An important advantage of the present invention is that the amount of this overlap can vary somewhat, so that sheets of core material can be combined together for a very long distance, e.g. for a length of tens or even hundreds of meters. Suitable widths of the zones, in particular when the sheets are joined in an automated fashion, are 0.5 - 4 cm, more preferably of 1 - 3 cm, e.g. about 2 cm.

The combined sheets can then be winded on a roll, which can be brought to the site where the construction of the laminated structure is envisaged.

A process for forming a laminated structure typically comprises the steps of placing at least two sheets of core material according to any of the previous claims on top of each other, whereby at least part of their respective zones overlap, optionally followed by a step wherein said sheets are attached to each other, thus forming a combination of said sheets, followed by applying fibrous material on one or two sides of said combined sheets, followed by applying liquid resin, which is subsequently allowed to cure. The laminated structure that may be obtained by such a process differs from the structures known in the prior art, in that it is essentially free of print-through of the connecting part of said sheets of core material. In addition, very large structures can be made (e.g. structures having a largest dimension of more than 2m, such as 3 m or more) that are nevertheless free of signs of the welds. Also the mechanical stability of the joint formed by the welded core materials is excellent, the mechanical strength of the weld being comparable to that of the mechanical strength at other locations in the laminated structure.

The core materials of the present invention may be used in the same way as described in the above-mentioned prior art documents e.g. for the production of fibre reinforced plastics materials. To this end several methods are available, either being based on the use of closed moulds (continuous lamination, infusion, resin transfer moulding, vacuum infusion process, multiple insert tooling, zero injection pressure, vacuum assister resin transfer moulding, pultrusion, filament winding) or being based on the manual impregnation of the fibre materials (hand lay-up; spray-up, vacuum bagging). In the closed moulding technique - which is usually automated - the fibre reinforcing material is placed in a mould, which is closed and subsequently filled with resin. An important advantage of these closed mould systems resides *inter alia* in the reproducibility of the properties of the product (better tolerances), in environmental considerations, in enhanced surface properties and in enhanced mechanical properties. It is also possible to apply higher fibre volume fractions.

The core materials of the present invention may be produced by the screen printing methods described in the above-mentioned documents. In general such a method may be carried out as follows. Expandable micro-spheres are introduced into a fibrous web, using a binder material, followed by expanding the micro-spheres and curing the binder. In a much preferred method the micro-spheres start to expand at a temperature below the curing temperature of the binder material.

The core material may suitably be prepared by a method wherein a non-woven is printed with a foam or an unfoamed binder, also containing micro-spheres, such as polymeric, glass or ceramic micro-spheres.

In the case expandable micro-spheres are used, it is preferred to use the following process. First a dispersion of expandable micro-spheres in a binder material is prepared, which dispersion is optionally foamed. The initial expansion temperature of the micro-spheres is preferably below the curing temperature of the binder material. Subsequently, the non-woven, having a thickness less than the required final thickness, is screen printed with the dispersion. Following this, the material is dried and heated to the expansion temperature of the micro-spheres. Upon expansion the temperature is further raised with the result that the binder material cures and sets the micro-spheres in the web. In this way a core material according to the invention can be prepared.

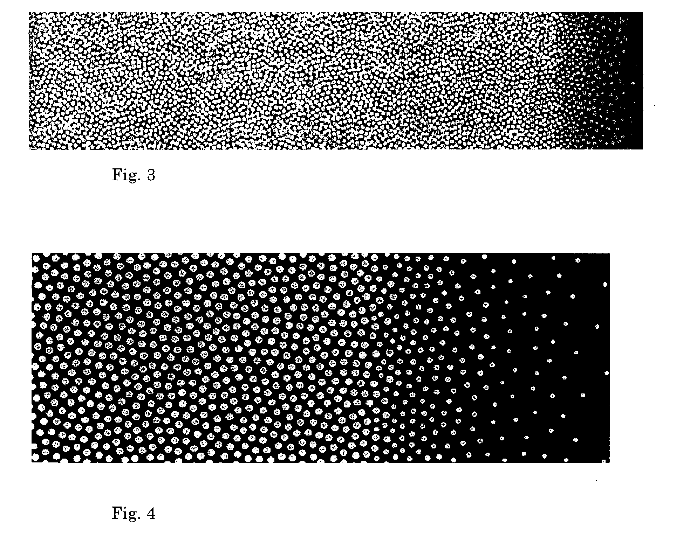

The screens that can be used for producing the core materials of the present invention are perforated in the desired pattern. In Fig. 3 by way of example a (photocopy of) a small part of the core material of the present invention is depicted (actual size, each foam structure member, viz. microsphere, measuring *ca.* 1 mm) the gradient being on the right hand side. The core material depicted in Fig. 3 can be obtained by the screen of which the corresponding portion is given in photocopy in Fig. 4 (the image of Fig. 4 is slightly enlarged, the real diameter of the largest holes is about 1 mm). The size of the holes in the screen depicted in Fig. 4 decreases as the density of the holes (number of holes per unit area) decreases. This is because the unexpanded material that is printed in and/or on the fibrous web may subsequently be allowed to increase in volume by a subsequent foaming step. It was found that if an unexpanded foam structure member has fewer neighbours, its size after foaming may become much larger than that of a foam structure member that is foamed in an area of higher density. In order to obtain a more or less homogeneous particle size distribution of the foam-structure members, the size of the printing holes becomes smaller as the density of the foam-structure members decreases. In a preferred embodiment the size as well as the number of holes in the screen decreases in the direction of the side of the core material sheet that bears the zone of decreased foam-structure member density. This preferred embodiment is illustrated in Fig. 4.

Preferably the foam-structure members have an irregular distribution, both in the zone as in the remainder of the sheet. The term "an irregular distribution" as used herein can be defined by its pattern repeat. The pattern repeat can be represented by the length (when determined in one direction) or area forming a pattern that is repeated in a different part of the material. Good results have been achieved with an irregular distribution, characterised in that in at least in one direction of the x-direction and the y-direction and preferably in both the x-direction and the y-direction, the pattern repeat of the pattern of members is at least 0.5 cm, preferably at least 1 cm. The upper limit is not critical. For practical reasons, the upper limit may be determined based upon the technique by which the core material is made. For example, screen-printing is a very suitable technique to make a core material. The upper limit of the pattern repeat, will then in general by determined by the circumference and/or width of the screen. For example, screens with a circumference of up to about 92.5 cm are commonly used. In practice the upper limit will generally be about 140 cm.

It is also possible to determine the pattern repeat based upon the number of members forming a repeating pattern. Good results have been achieved with an irregular distribution, wherein in at least in one direction of the x-direction and the y-direction no repetition occurs in any pattern formed by at least 10 adjacent members and preferably in any pattern formed by at least 25 adjacent members. More preferably no repetition is visible in any members pattern in an area formed by at least 100 adjacent members.

The irregular distribution is preferably mainly a random distribution, i.e. a distribution wherein no repetition of pattern of the members occurs within the plane of the core material. A core material with a random distribution has been found to be very suitable for manufacturing a shaped article with a very high surface quality, in particular with respect to the visual appreciation.

The present invention thus provides a core material in general being drapable and preferably having a compression-resistance of more than 30 % at 1 bar pressure wherein the core material is based on at least one fibrous web containing a foam-structure within the web, said foam-structure being formed by a plurality of members, which members are separated from each other by channels that are permeable to resin, wherein the members have an average diameter as defined by the diameter of the enveloping circle, in the plane of the material of less than 3 mm, preferably of 0.2-1 mm, and wherein the channels have an average diameter of less than 0.75 mm, preferably of 0.3-0.5 mm.

The core material of the present invention has been found very suitable for improving surface quality and/or improving the visual appreciation, preferably with respect to reducing the print-through effect, in laminate. More in particular, it has been found that such a core material is very suitable for providing a shaped article having an orange peel value of less than 30. Instruments to measure the orange peel value are known in the art and are commercially available, e.g. instruments using the D-Sight technique, developed by Diffracto Ltd (Canada). This technique is discussed in Reynolds et al. "Theory and applications of a surface inspection technique using double-pass retroreflection", Optical Engineering, Vol 32, No 9, pp. 2122-2129, 1993 and in J.H. Heida and A.J.A. Bruinsma; "D-Sight Technique for Rapid Impact Damage Detection on Composite Aircraft Structures"; Presented at: the 7th European Conference on Non-Destructive Testing in Copenhagen, 26-29 May 1998; available at NDT.net - June 1999, Vol. 4 No. 6, US-A-4 863 268 and US-A-5 075 661.

For practical reasons the average diameter of the members will typically be at least 0.5 mm.

The members and channels may be distributed in a more or less regular way, e.g. with a pattern repeat of less than 1 cm, more in particular of less than 0.5 cm, or in an irregular way as defined below.

For the other parameters, in particular permeability, nature of the materials of which the core material is made, shape of the members, free volume of the web, the conditions as described below apply.

The core material of the present invention can also be based on at least one fibrous web containing a foam-structure within the web, said foam-structure being formed of a plurality of members, wherein the members are irregularly distributed within or upon the web, wherein the members are separated from each other by channels which channels are permeable to a resin.

Such a core material has been found very suitable for improving surface quality and/or improving the visual appreciation, preferably with respect to reducing the print-through effect, in laminate. More in particular, it has been found that such a core material is very suitable for providing a shaped article, in particular a flat article, having an orange peel value of less than 30.

For the other parameters, in particular permeability, nature of the materials of which the core material is made, shape of the members, free volume of the web, the conditions as described below apply.

Depending upon its intended use, in particular with respect to the need of a resin to be able to penetrate into the core material within a particular time-span, the permeability for resin of a core material according to the invention can be chosen in a wide range. Particularly good results have been obtained with a core material having a permeability in the plane of the material for resin of at least $1 \times 10^{-9}$ m$^2$. In such a material the flow properties of the resin have been found to be very satisfactory. For even better flow properties, the permeability is preferably at least $1.5 \times 10^{-9}$ m$^2$, more preferably at least more than $5 \times 10^{-9}$ m$^2$.

The permeability is largely provided by the channels, formed by the areas containing no members. The permeability ($k$) is defined herein according to the law of Darcy for steady flow as $q = \dfrac{k.A}{\eta} . \dfrac{\Delta p}{\Delta x}$, wherein

q is the resin flow in m$^3$/s, A is the total surface of the cross section through which the resin flows in m$^2$, $\eta$ is the viscosity of the resin in Ns/m$^2$, $\Delta p$ is the pressure difference in N/m$^2$ and $\Delta x$ is the distance over which the pressure difference exists and the resin flows in m. The permeability is defined in the plane of the material, that is not perpendicular to the material, but parallel to the upper and lower surface thereof. In panel lamination, however, there is resin flow perpendicular to the plane of the core material and the permeability in the direction perpendicular to the plane of the core material is more important.

The drapability is defined herein as the ability of the core material to conform to a contoured surface, in particular a mould. In particular a core material as defined herein is drapable, if it can be bent around a corner with a radius of 10 mm or less, without substantial irreversible deformation of the core material. This allows the material to be draped in a good way in the mould, thus enabling the production of smoothly shaped products.

Although the above defined drapability is in general sufficient for use in close systems, it is an advantage that the present invention provides a core material with a much better drapability, such as a drapability that allows bending around a corner with a radius of only 5 mm or less. Such a material is generally referred to by the skilled person as "drapable".

The compression resistance is defined herein as the ability to resist a force that tends to crush or buckle. It is measured by determining the height of the material before applying a pressure and during applying 1 bar pressure perpendicular to the plane of the material. The compression resistance is calculated as 100 % x (height of the material at 1 bar pressure)/(height of the material at no pressure).

The compression resistance may be chosen in a wide range, depending upon the type of application and the desired properties. Good results have inter alia been achieved with a core material having a compression resistance of at least 30 % at 1 bar pressure. Especially in case the core material should be suitable for a closed mould system, it is highly preferred that the compression resistance is at least 60 % at 1 bar pressure, even more preferably about 70 % or more at 1 bar pressure. Such a resistance has been found highly advantageous because of a very low tendency of the channels being pressed together, and thus compromising the entry of resin into the channels when being processed in a closed mould. Accordingly, a core material having a compression-resistance of respectively more than 75 %, at least 80 %, at least 90 % or at least 95 % at 1 bar pressure is highly preferred.

Nonetheless, under some circumstances one may opt for a core material having a relatively low compression resistance, e.g. of about 50 % or less.

The present invention combines the careful balancing of the properties of the various components, fibres, binder, foam structure and the like to obtain a suitable balance between properties such as compression-resistance, drapability and permeability in the core material on the one hand and to obtain a high surface quality in a shaped article formed with such a core material on the other hand. Suitable conditions can be determined by the skilled professional by routine considerations and upon the information disclosed herein and in the cited references

If a good surface quality is important but there is also a desire to limit the use of resin and/or the weight of the final composite one may choose to use a material for the members with relatively light material, e.g. a microsphere foam structure; a material with relatively large members, e.g. in the range of 1-3 mm; a material with relatively narrow channels between the members, e.g. of less than 1 mm; and/or a relatively low free volume, e.g. in the range of 40-60 vol %.

If the surface quality is of the utmost importance and savings in weight or cost are of lesser importance, one may to choose a core material with relatively small members, e.g. in the range of 0.5-3 mm (in case of a core material wherein the pattern is not irregular: 0.5-1.5 mm), a high degree of irregularity of the member pattern and/or a resin with a low tendency to shrink after curing, e.g. an epoxy resin.

If drapability and surface quality should be relatively high, one may choose to use relatively wide channels, e.g. with an average diameter of 0.5-2 mm (in case of a core material wherein the pattern is not irregular: 0.5-0.75 mm), in combination with relatively small members, e.g. with an average diameter of less than 1 mm, a high degree of irregularity and/or a relatively flexible fibre material, e.g. comprising polyester fibres and acrylate binder.

The members form 'isles' within or upon the web, which members are at least largely surrounded by channels, through which channels resin can flow. The channels are largely free of web material or fibres, although some fibre material may be present to provide sufficient consistency of the core material. Generally, the material content in the channels should be low enough to allow a sufficient permeability to allow sufficient penetration of resin, preferably it should allow a permeability of at least $1 \times 10^{-9}$ m$^2$.

The members are typically made of a closed cell foam structure, e.g. from a material that is usable as a binder material as disclosed herein. The members can also comprise micro-spheres or being formed thereof. These micro-spheres will be discussed below.

The members largely contribute to the compression resistance of the core material and are in general substantially impenetrable to the resin. The members in any case have a permeability of substantially less than $1 \times 10^{-9}$ m$^2$.

The members can have any shape. Good results have been achieved with a core-material wherein at least the majority of the members are selected from the group consisting of members with circular, ellipsoidal and polygonal cross-sections parallel to the plane of the material. Of course combinations thereof may be employed. Preferred members with polygonal cross-sections are members with triangular, tetragonal, pentagonal, hexagonal, heptagonal or octagonal cross-sections.

The irregular distribution may be obtained by using more or less uniformly shaped members, with the same or different dimensions. Good results have for example been achieved with a core material wherein at least the majority and preferably substantially all members have a circular or ellipsoidal cross-section parallel to the plane of the material.

The irregular distribution may be obtained by using a variety of differently shaped members. Good results have been achieved with a core material wherein at least the majority and preferably substantially all members have a polygonal cross-section parallel to the plane of the material. The differently shaped members in such a core-material are preferably selected from the group of triangles, tetragons, pentagons and hexagons.

It has been found that particularly good results with respect to surface quality are obtained with a core material having an irregular pattern wherein at least the majority of the members and preferably substantially all members have a diameter, as defined by the diameter of the enveloping circle, in the plane of the material of less than 3 mm. Preferably, at least the majority of members and more preferably substantially all members have a diameter in the plane of the material of less than 2.5 mm. Very good results have been obtained with a core material wherein at least the majority of the members have a diameter of less than 1.5 mm.

The lower limit of the diameter of the members is not particularly critical. For typical applications, at least the majority of the members will have a minimum diameter of at least about 0.2 mm. For practical reasons the diameter will generally be at least about 0.5 mm. Factors, other than the surface quality, to which the diameter of the members may be relevant is the extent to which one wishes to restrict the use of resin in a closed mould system.

Preferably at least the majority of the channels between members have an average diameter of less than 2 mm (in case of an irregular pattern), more preferably of less than 1 mm (in case of an irregular pattern), even more preferably of less than 0.5 mm. The lower limit of the channels is not particularly critical, as long as the permeability remains high enough, as defined herein. A suitable lower limit can routinely be determined by the skilled professional, depending upon the resin and moulding conditions. Typically the majority of the channels will have a minimum average diameter of at least 0.3 mm. Advantages of using a relatively high diameter, e.g. 0.5 to 2 mm (0.5-0.75 in case the core material does not have an irregular pattern) may be a fast flow of resin through the material and a relatively high drapability. Advantages of a relatively low diameter, e.g. in the range of 0.3 to 0.5 mm may include relatively low resin uptake and a higher surface quality.

The thickness of the core material can be varied within wide ranges, e.g. between 1 and 6 mm, preferably between 1.5 and 4 mm, although thicker or thinner core materials can be made in accordance with the invention. The members usually at least extent to the majority of the thickness of the material.

Preferably the fibrous web containing a foam structure has a free volume of less than 80 vol.%, more preferably of 50-70 % by volume. In this respect the free volume is understood to mean the volume of the material that can be accessed by resin. The remainder of the volume will be formed by the members (and some fibres).

A preferred web comprises at least 20 wt.% of fibres, up to 80 wt.% of binder material, which is optionally foamed. The closed cell foam structure forming the members can be prepared from (optionally expandable) microspheres which are introduced into the web using an optionally foamed binder material.

Good results have been obtained with a core material containing micro-spheres having an activation temperature of at least 120 °C, wherein the free volume in the web is at most 80 vol.%. The web may be mechanically, physically or chemically bonded.

Much preferred is a core material comprising at least 30 wt.% of fibres, up to 70 wt.% binder material, optionally also containing expandable micro-spheres. In practice the amount of expandable micro-spheres will generally be less than 15 wt. %, preferably 1-10 wt % based upon the total weight of the core material.

Preferably the micro-spheres are expandable and more preferably they have an activation temperature of at least 120 °C, although micro-spheres that have a lower activation temperature than 120 °C, such as of 100 °C or less, may also be used.

Very good results have been achieved with a core material wherein expanded thermoplastic microspheres, e.g. of a thermoplastic polymer based on an alkylmethacrylate, such as methyl methacrylate, acetonitril (such as polyacetonitril (PAN)), vinilydene chloride or a combination thereof, are present in the web, said micro-spheres having an initial expansion temperature below the curing temperature of the binder. Microspheres are commercially available, e.g. Expancel™ by AKZO-NOBEL.

The core material of the invention may be prepared using techniques known for producing the prior art core materials for the manual production of fibre reinforced plastic materials. The preparation may for example be based upon the methodology as described in EP-A-1 010 793. Preferably the material is made by rotary screen printing.

The initial expansion temperature of the microspheres is preferably between 100 and 190 °C. The curing temperature of the binder is preferably above 170 °C.

The fibrous web to be used according to the invention will usually be a non-woven, which may be reinforced, based on conventional fibres. The manufacture of suitable non-wovens has for instance been described by Dr. H. Jörder, "Textilien auf Vliesbasis" (D.V.R. Fachbuch, P. Kepper Verlag). It is also possible to use a combination of a non-woven fibrous web with a reinforcing fabric, one within or on top of the other.

The fibres of the web are preferably selected from the group of natural fibres, glass fibres, metal fibres, ceramic fibres or synthetic fibres, such as acrylic, polyethylene, polypropylene, polyester, polyamide (aramide), carbon or polypropylene fibres and combinations thereof. More preferably the fibres are selected from the group of glass fibres, polyester fibres, polyester-polyethylene bicomponent fibres and combinations thereof. Very good results have been achieved with polyester fibres. Polyester fibres have been found to have very good adherence with the resin and tend to have a favourably low moisture content.

In a preferred embodiment of the invention, the non-woven is based on polyester fibres that are chemically bound to acrylic binders.

The non-woven may also be based on a combination of polyester fibres and polyethylene-polyester bicomponent fibres (or other low temperature melting fibres or powders). These types of webs have been thermally bound by the bicomponent fibres. By heating the web to the initial expansion temperature of the microspheres, which is above the melting point of the polyethylene bond, the web becomes loose and will expand easily. After expansion, and curing the final material again has its good bond, resulting in the advantageous combination of properties of the invention. At the same time the web is very easy to handle at the initial stages of the process, thanks to the thermal bonding.

The micro-spheres that may be provided in a fibrous web according to the invention preferably comprise a thermoplastic synthetic resin material that is solid at room temperature, but they may also comprise a thermoset to a certain extent. Examples of suitable resins include polystyrene, styrene copolymers, polyvinyl chloride, vinyl chloride copolymers, vinylidene chloride copolymers and so forth.

In expandable micro-spheres, usually a blowing agent has been incorporated. The presence of this blowing agent is responsible for an expansion of the micro-spheres when a fibrous web, comprising the micro-spheres, is cured. Thus, the micro-spheres are pressed into the fibrous web in unexpanded form, for example by means of a paste, such as a foam paste. The blowing agent may be a chemical or physical blowing agent, such as azodicarbonamide, isobutane, isopentane, pentane, freon, iso-octane, *et cetera.*

The micro-spheres advantageously have a diameter of 4 - 20 $\mu$m in unexpanded state, and a diameter of preferably 10 - 100 $\mu$m in expanded state. After expansion of the micro-spheres, the amount thereof in the web is in general 10 to 60 vol.%. This amount depends on the amount of micro-spheres used and the degree of expansion thereof.

Suitable binders in this regard are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. In addition, the binder, paste-like composition optionally contains water, surfactants, foam stabilizers, fillers and or thickeners, as has been described in EP-A-0 190 788.

The present invention further relates to a laminate comprises a core material according to the invention, laminated with at least one fibrous fleece. The laminate may be formed in different ways, and preferably by stitching or gluing the at least one fleece to one or both sides of the core material. Suitable methods of forming the laminate are known in the art.

An advantage of providing a laminate is the ease of use. A laminate allows easy placement of the combination of core material and fleeces in one step. Thus the manufacturer of a composite does not have to staple different layers (e.g. respectively bottom fleece, core material, top fleece) into the mould in separate steps.

In principle any fibrous fleece suitable for preparing a composite can be used. Preferred fibrous fleeces include glass fibre fleeces, carbon fibre fleeces, polyaramide fibre fleeces and hybrids thereof, e.g. glass-carbon fibre fleeces, glass-polyaramide fibre fleeces or carbon-polyaramide fibre fleeces.

A core material according to the invention has *inter alia* been found very suitable to make thin laminates, whilst obtaining a surface with a highly desirable smooth appearance. For example a laminate according to the invention may very suitably have a total thickness of 2 to 10 mm, preferably of 3 to 6 mm. Good results have *inter alia* been realised with a laminate of a core material with a thickness of 1-2 mm covered at both sides with a fleece, preferably a glass fleece, with a thickness of approximately 0.4-0.8 mm, e.g. a glass fleece of approximately 225-600 g/m$^2$, typically about 450 g/m$^2$. Thus a laminate can be obtained with a thickness of about 2-3 mm, which laminate has been found to have a very good surface quality after being cured with a resin, in particular with an epoxy resin.

The invention also encompasses a method for manufacturing a shaped article, wherein a fibrous web as described hereinabove is impregnated with a liquid resin and a hardener there for.

Suitable liquid resins for impregnating a fibrous web according to the invention are any synthetic plastic materials that can be applied in liquid form and be cured. Examples are polyester resins, phenylester resins, polyurethane resins, phenol resins, melamine formaldehyde resins and epoxy resins. Given the specifications of a shaped article to be manufactured, a skilled artisan will be able to suitably select an appropriate resin.

Suitable hardeners for use in a method according to the invention are any hardeners which can be used to cure the chosen liquid resin. These systems are known to the skilled person. It belongs to the standard knowledge of the person skilled in the art to be able to combine resin and hardener so as to obtain optimum results.

The present invention further relates to a shaped article based upon a core material according to the invention, in particular a shaped article obtainable by a method according to the invention wherein a core material according to the invention is impregnated with a resin and cured. In particular, the present invention relates to such a shaped article having a orange peel value or D-Sight index of less than 30, preferably less than 25, more preferably of 10-20, as determined by the D-Sight technique (e.g. on a D-SIGHT system, supplied by Diffracto Ltd., Canada), using the conditions as specified in the Examples.

The invention will now be elucidated by the following, non-restrictive examples.

EXAMPLE 1 (reference)

Two identical pieces of web were prepared consisting of 80 wt.% polyester fibres and 20 wt.% binder (acrylate).

A binder-microsphere mixture was made by mixing 5 kg of expandable microspheres (Expancel™, AKZO-NOBEL) into 95 kg of acrylate dispersion. The solids content was about 52 wt %.

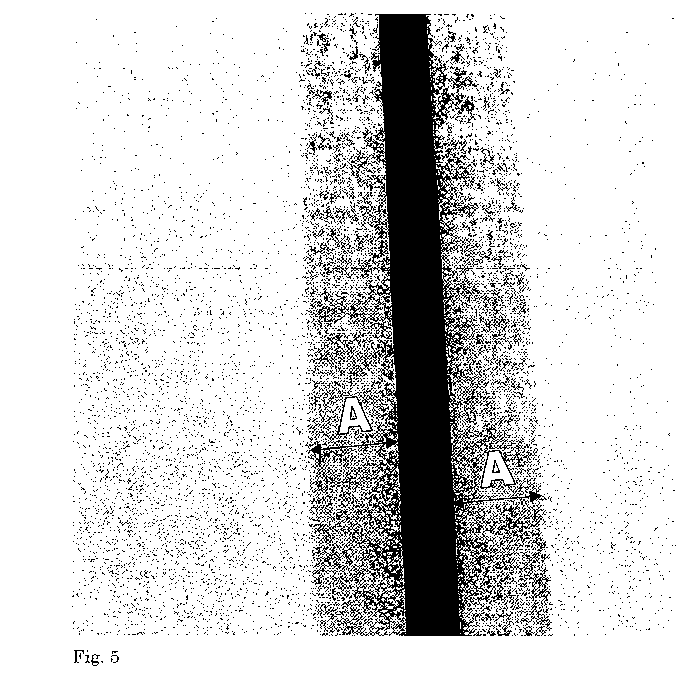

The binder-microsphere mixture was applied to the web by rotary screen printing, wherein the mixture was pressed into the web. The members making up the foam-structure were printed in a pattern as depicted in Fig. 5, which corresponds to the distribution that is schematically depicted in Fig. 1, *viz.* the members being present with a constant density in the connecting regions (the zones indicated by 'A' in Fig. 5). The screen contained round holes with an approximate diameter of about 0.6 mm, in a density of about 40 holes per $cm^2$, except in the overlapping zones were the density was about 20 holes per $cm^2$. The diameter of the holes in the screen in the part that corresponds to the overlapping zone was somewhat less than 0.6 mm.

After printing, the web was dried at about 110 °C and subsequently expanded to a thickness of about 2 mm at a temperature of 200 °C. Simultaneously the web was cured.

The two pieces of cured core material thus obtained were placed partly on top of each other so that their connecting regions overlapped exactly.

The combined core material was sandwiched between two layers of fibrous glass fleece (chopped strand mat, material weight: 450 $g/m^2$ ; supplied by Owens-Corning). This laminate was impregnated with polyester resin (Synolite™ 6811-N-1, DSM resins) in a closed mould system by vacuum injection at a pressure of 0.2 bara.

To one side of the mould a surface finish (black Gelcoat™ yt 701; from De IJssel) of about 0.5 mm was applied.

Although the surface finish of the laminate was very good, the surface showed two seams at a position corresponding to the location of the edges of each of the pieces of core material. This was found to be unacceptable.

Fig. 2A shows a side view of the laminated product thus obtained. It clearly shows that the laminate has a decreased thickness at the position of the joint at the backside of the finished surface, as indicated by the arrow in Fig. 2A.

EXAMPLE 2 (reference)

Example 1 was repeated but this time a butt joint was made of two pieces of core material having a single uniform density of 40 holes per $cm^2$.

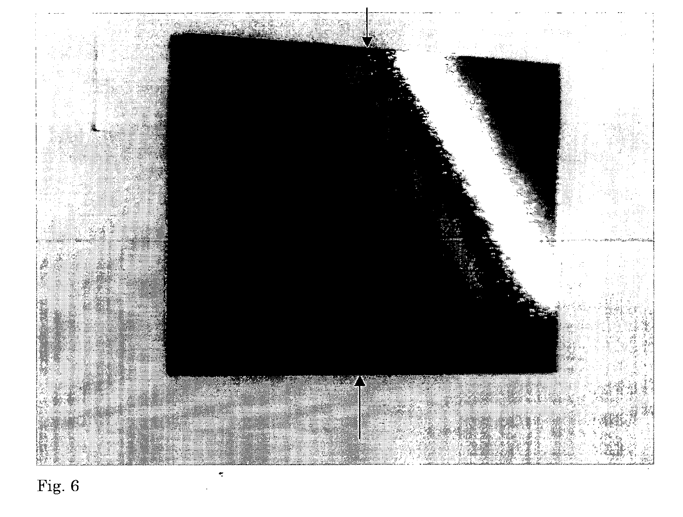

Although the two pieces of core material were positioned such that there was virtually no split visible, the laminate thus produced clearly showed a seam on the finished surface, which was unacceptable. A photograph of this product is reproduced in Fig. 6. The seam is clearly visible between the arrows in this figure.

EXAMPLE 3 (invention)

Example 1 was repeated, but this time two pieces of the core material that is depicted in Fig. 3 were used.

The laminated product thus obtained showed no seams on its surface and its surface appearance was thus wholly acceptable. In addition, the thickness of the laminate was constant at the location of the joint. A photograph of a side view of this laminated structure is reproduced in Fig. 2B.

**Claims**

1. Core material comprising a sheet of at least one fibrous web containing a foam-structure within the web, said foam-structure being formed of a plurality of members, which members are separated from each other by channels that are permeable to resin, which sheet comprises a zone at one or more of its edges, in which zone the density of said members changes in the direction of the edge of said core material nearest to said zone.

2. Core material according to claim 1, wherein the density of said foam-structure members decreases in the direction of the edge of said core material nearest to said zone.

3. Core material according to any of the previous claims, wherein said zone has a width of from 1 to 6 cm, preferably from 2 to 5 cm, more preferably about 3 cm.

4. Core material according to any of the previous claims, wherein the density of said foam-structure members changes essentially linearly in the direction of the edge of said core material nearest to said zone.

5. Core material according to any of the previous claims, wherein the foam structure members in said zone are of essentially the same size as the foam structure members in the remainder of said core material.

6. Core material according to any of the previous claims, wherein said foam structure members comprise micro-spheres, preferably having a diameter of less than 3 mm and wherein the channels have an average diameter of less than 1 mm.

7. Core material according to any of the previous claims, wherein said zone is present on at least two edges of said sheet.

8. Combination of two or more sheets of core material according to any of the previous claims, wherein said two or more sheets are welded together by placing at least part of the respective zones present on each sheet on top of each other, so that an overlapping portion is formed, and optionally attachment means.

9. Combination according to claim 8, wherein said overlapping portion is a strip, preferably having a width of 0.5 - 4 cm, more preferably of 1 - 3 cm.

10. Process for forming a laminated structure, comprising the steps of placing at least two sheets of core material according to any of the previous claims on top of each other, whereby at least part of their respective zones overlap, optionally followed by a step wherein said sheets are attached to each other, thus forming a combination of said sheets, followed by applying fibrous material on one or two sides of said combined sheets, followed by applying liquid resin, which is subsequently allowed to cure.

11. Combination according to claim 8, wherein said sheets are attached using a gluing strip being placed over said overlapping portion on the top side or over said overlapping portion on the bottom side or in the junction between said two sheets, or a combination thereof.

12. Laminated structure obtainable by the process according to claim 10, which is essentially free of print-through of the connecting part of said sheets of core material.

13. Laminated structure according to claim 12 having a largest dimension of at least 2.5 m, preferably at least 3 m, more preferably at least 3.5 m.

14. Vehicle, construction or building comprising a laminated structure according to claim 12 or 13.

Fig. 1

A                                    B

Fig. 2

Fig. 3

Fig. 4

Fig. 5

Fig. 6

European Patent Office

**EUROPEAN SEARCH REPORT**

Application Number

EP 05 07 5221

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 1 403 024 A (LANTOR B.V) 31 March 2004 (2004-03-31) * claim 1 * ----- | 1-14 | B29C44/12 B29C70/66 B29C70/08 B32B5/18 |

TECHNICAL FIELDS SEARCHED (Int.Cl.7)

B29C
B32B

The present search report has been drawn up for all claims

| Place of search | Date of completion of the search | Examiner |
|---|---|---|
| The Hague | 8 November 2005 | Van Wallene, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 07 5221

This annex lists the patent family members relating to the patent documents cited in  the above-mentioned European search report.
The members are as contained in the European Patent Office EDP file on
The European Patent Office is in no way  liable for these particulars which are merely  given for the purpose of information.

08-11-2005

| Patent document cited in search report | | Publication date | Patent family member(s) | | Publication date |
|---|---|---|---|---|---|
| EP 1403024 | A | 31-03-2004 | AU | 2003267864 A1 | 19-04-2004 |
| | | | BR | 0314682 A | 09-08-2005 |
| | | | CA | 2500261 A1 | 08-04-2004 |
| | | | WO | 2004028776 A1 | 08-04-2004 |

EPO FORM P0459

For more details about this annex : see Official Journal of the European Patent Office, No. 12/82